# EUROPEAN PATENT SPECIFICATION

(11) **EP 2 896 452 B1**
(45) Date of publication and mention of the grant of the patent: **27.01.2021**
(21) Application number: 15155293.2
(22) Date of filing: 01.03.2010
(51) Int. Cl.: B01J 12/00, B01J 19/00, C01B 3/38

(54) **STEAM REFORMER**
Spaltrohofen
Appareil de réformation à vapeur

(30) Priority: 27.02.2009 NL 1036644
(43) Date of publication of application: 22.07.2015
(62) Divisional of application: 10155102.6
(73) Proprietor: Green Vision Holding B.V., 6827 AV Arnhem (NL)
(72) Inventor: Scholten, Anton, 7321 LE Apeldoorn (NL); Westendorp, Gerard, 6671 BL Zetten (NL); ten Dam, Johannes Avertanus Josef, 7391 JE Twello (NL); Smolenaars, Jacobus Gerardus Wihelminus Adele, 5856 CJ Wellerlooi (NL); van Driel, Marinus, 3825 BL Amersfoort (NL); de Jongh, Walter Ricor, 7424 AB Deventer (NL); Rep, Marco, 6846 HN Arnhem (NL)
(74) Representative: van Dam, Vincent

(56) References cited:
- EP-A- 1 734 002
- DE-A1- 2 705 324
- US-A- 4 340 501
- US-A- 6 136 279
- US-B1- 6 667 014

## Description

The invention relates to an apparatus for converting a feed gas comprising organic compounds and water vapour into a product gas substantially comprising carbon dioxide and hydrogen, comprising
- a reformer part with at least one reaction chamber which is provided with an inlet opening for feed gas and an outlet opening for product gas and which is bounded by the inner wall of an outer tube closed at one outer end and the outer wall of an inner tube received coaxially in this outer tube and open at both its outer ends, and
- an furnace part for heating the reaction chamber.

In such an apparatus, which is known as a steam reformer, the following reaction takes place.

Cₓ H_{y} O_{z} + (2x-z) H₂O -> x CO₂ + (2x-z+y/2) H₂

This reaction is endothermic, so heat is necessary to sustain the reaction.

Such an apparatus is known, for instance from DE 27 05 324 A1. The apparatus described in this publication comprises a number of parallel outer tubes which are closed at their lower outer end, suspended at their upper outer end from a shared carrying plate and heated from outside with for instance flue gas or helium gas. The feed gas herein enters the outer tubes at the top, reverses direction on the underside and subsequently flows upward through the inner tube.

When heating takes place with flue gas, use is made of a number of burners, as for instance known from EP 1 734 002 A2.

A problem in designing a steam reformer is that for an optimum chemical conversion the temperature is close to or higher than the temperature at which the materials to be used for the reactor chamber degrade. A catalyst to be used is kept in typical cases at a temperature of 800°C, while the walls of a reaction chamber may not exceed a temperature of about 900°C. Use must however be made here of combustion gases typically having a temperature of about 1600°C.

In the known apparatus a plurality of burners are applied for heating a plurality of outer tubes. A plurality of burners are necessary to enable a uniform temperature of the outer tubes to be realized at a power lower than the maximum power of the burners.

The use of a plurality of burners is a cost-increasing factor in the design of the apparatus. A furnace with a plurality of burners moreover has the drawback that the combustion gases thereof, after heat exchange with the outer tubes, are emitted at a relatively high temperature, this having the effect of increasing the operating costs of the steam reformer.

US 6 667 014 B1 discloses a steam reformer for converting a reactor fuel into a product gas, which reformer includes a catalyst bed which is formed from catalyst blocks which are configured so as to match the configuration of the catalyst bed chamber. In this reformer, heated gas streams, consisting of combustion products, are supplied directly from the combustion chamber to the exterior surface of the outer wall of the reaction chamber, thus heating the reaction chamber substantially by means of convection. No teaching is given about the way to access the interior of the outer tubes, for instance for maintenance or repair.

It is an object of the invention to provide a steam reformer which is of compact construction and which can be designed and operated in cost-saving manner.

These objects are achieved, and other advantages gained, with an apparatus of the type stated in claim 1.

Other than in a prior art steam reformer, the feed gas in an apparatus according to the invention enters the inner tubes, reverses direction at the end of these outer tubes and flows out through the outer tube in heat-exchanging contact with the furnace.

It has been found that a surprisingly good heat transfer can be realized in a steam reformer with such a flow direction of the feed gas, wherein the temperature of the outer tube is relatively homogeneous and as much heat as possible can thus be fed to the reactor space without locally exceeding the maximum allowable tube temperature despite the fact that the heat flux is not relatively homogeneous everywhere.

In an apparatus according to the invention, the interior of the outer tubes is particularly easily accessible, for instance for maintenance or repair.

The reformer part is provided with an inlet chamber which is bounded by the second wall of the outlet chamber and a third wall lying opposite this second wall and coupled releasably to the second wall.

In another embodiment the reactor chamber comprises a catalyst material which is for instance provided on at least a part of a carrier foil arranged around the inner tube.

In order to enlarge the effective surface area of the carrier foil, this foil for instance has in a cross-section through the inner and the outer tube a periodic structure of successive peaks and valleys.

In a subsequent embodiment wherein the reactor chamber is provided with a heat exchanger for transfer of heat between feed gas supplied through the inner tube and product gas flowing through the reactor chamber, the heat exchanger is provided by a foil of a heat conductive material arranged around at least a part of the inner tube, this foil having in a cross-section through the inner and the outer tube a periodic structure of successive peaks and valleys.

In a preferred embodiment of an apparatus according to the invention in which the furnace part comprises a burner, a combustion chamber and a heat transfer section, the heat transfer section is provided by at least one heat transfer tube which is closed at one outer end and by which the at least one outer tube of the reformer part is enclosed.

Other than in a prior art apparatus, heat transfer in an apparatus according to this embodiment from the furnace part to the reformer part substantially does not take place by means of convection but by means of radiation. This heat transfer by means of radiation further contributes toward a uniform temperature distribution in the reactor chamber.

Such an apparatus according to this embodiment moreover provides the advantage that it is possible in particularly simple manner to place one or more temperature sensors, for instance thermocouples, in the space between the furnace part and the reformer part.

In order to enhance a good contact between the combustion gases from the burner with the outer wall of the heat transfer tube, the furnace part for instance comprises a discharge channel for combustion gases which is formed by the outer wall of the heat transfer tube and a coaxial cylindrical jacket extending round this wall and provided with passage openings.

The passage openings are for instance provided in a part of the cylindrical jacket proximally of the closed outer end of the heat transfer tube, and the discharge channel also comprises an outlet in a part of the heat transfer section distally of the closed outer end of the heat transfer tube.

In an embodiment an apparatus according to the invention comprises a heat exchanger for transfer of heat between the heat transfer section and the reactor chamber, this heat exchanger being provided by a foil of a heat conductive material arranged around at least a part of the heat transfer tube, which foil has in a cross-section through the outer tube and the heat transfer tube a periodic structure of successive peaks and valleys.

In another embodiment the heat transfer tube is provided on its outer side with a heat-insulating material in a zone around its closed outer end.

The advantages of an apparatus according to the invention become particularly manifest in an embodiment in which the reformer part comprises at least two reactors placed in parallel, wherein the respective inlet openings are coupled by a shared inlet manifold, and the respective outlet openings are coupled by a shared outlet manifold.

In an embodiment which is particularly advantageous in practice the number of parallel reactors amounts to 3n²-3n+1, wherein n is a whole number 2≤n≤13, which reactors in a cross-section are placed adjacently within a regular hexagon in parallel rows, wherein a first outer row comprises n reactors and each subsequent row comprises one reactor more up to a maximum of 2n-1 reactors, after which each subsequent row comprises one reactor less up to a second outer row lying opposite the first outer row, which second outer row comprises n reactors.

For instance for the value n=3 the number of reactors according to this embodiment amounts to 19, which in a cross-section are placed adjacently within a regular hexagon in parallel rows of respectively three, four, five, four and three reactors.

The placing of the parallel reactors in this latter embodiment is highly cost-saving and compact, wherein the reaction chambers are however quickly and readily accessible, for instance for maintenance or repair.

The invention will be elucidated hereinbelow on the basis of exemplary embodiments and with reference to the drawings.

In the drawings
Fig. 1 shows a schematic view of a first embodiment of a steam reformer according to the invention in a disassembled state,
Fig. 2 shows a schematic view of a second embodiment of a steam reformer according to the invention in an operating state,
Fig. 3 is a perspective view of a part of a detail of a reactor of a steam reformer as shown in fig. 1 and fig. 2,
Fig. 4 is a perspective view of a first embodiment of a folded carrier foil for a catalyst,
Fig. 5 is a perspective view of a second embodiment of a folded carrier foil for a catalyst, and
Fig. 6 is a perspective view of a third embodiment of a folded carrier foil for a catalyst.

Corresponding components are designated in the figures with the same reference numerals.

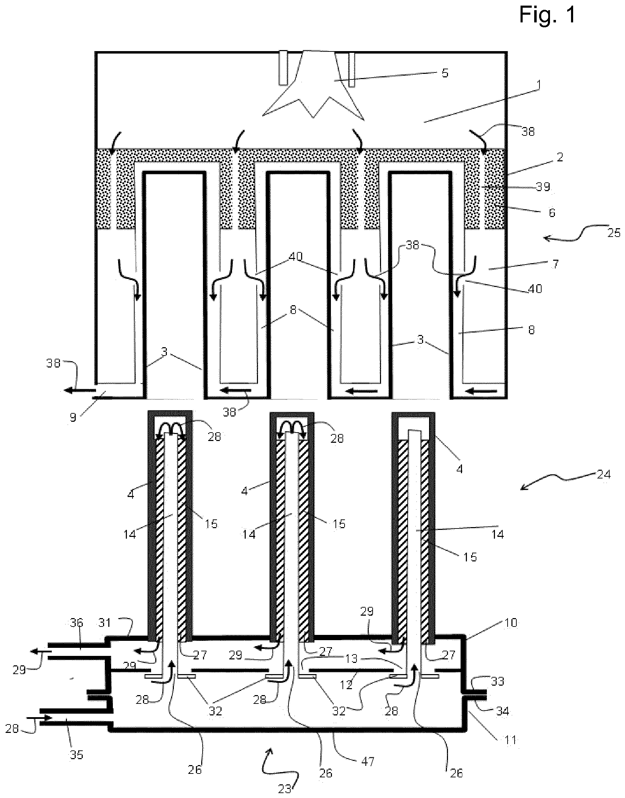

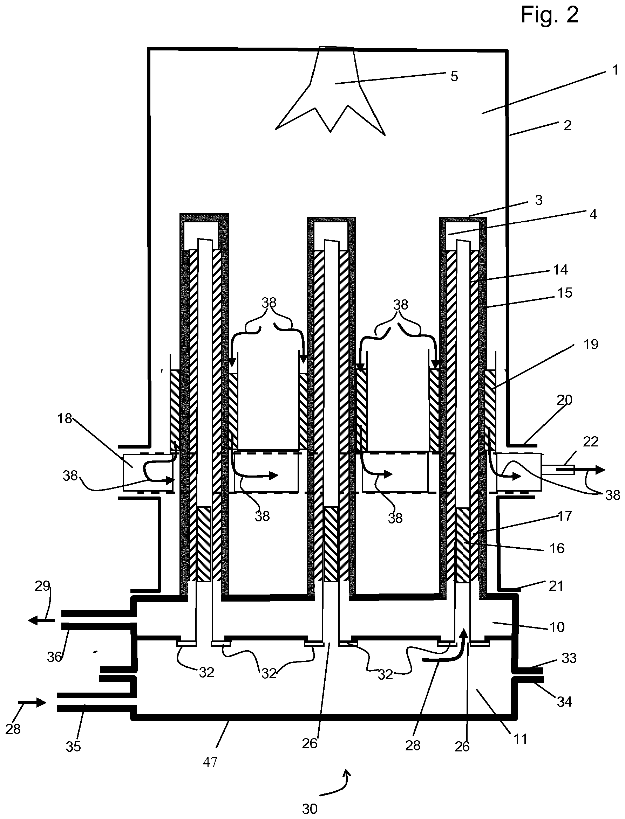

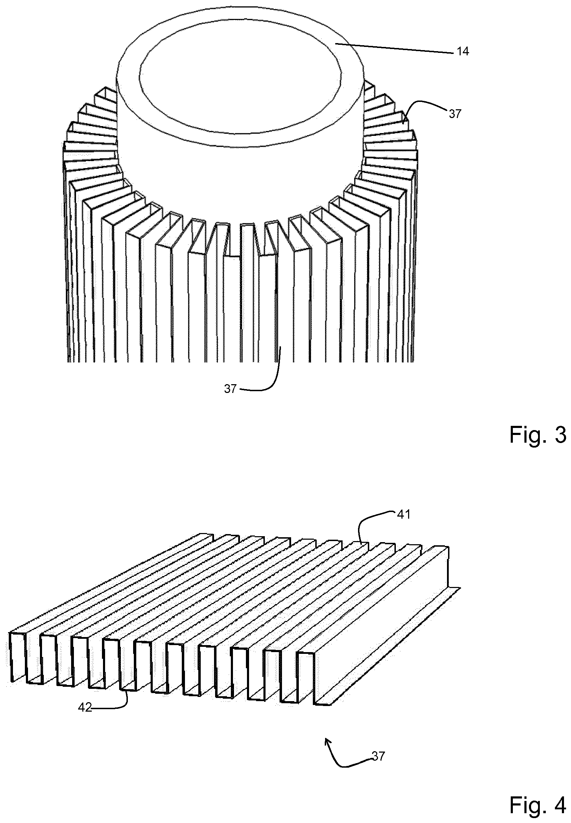

Fig. 1 shows a steam reformer 23 with a reformer part 24 and a furnace part 25. Reformer part 24 is shown with three reactors placed in parallel which are each formed by an outer tube 4 closed at its top and an inner tube 14 which is received coaxially therein and which is open at both its outer ends, wherein the inner wall of outer tube 4 and the outer wall of inner tube 14 bound a reaction chamber 15 which is filled with a catalyst on a carrier foil. The three shown reactors are placed on upper wall 31 of an outlet manifold 10, into which debouch the open outer ends 27 of outer tubes 4. A second wall 12 lying opposite first wall 31 is provided with closable insertion openings 13 which lie opposite outer tube 4 and through which inner tubes 14, in some cases provided with catalyst carrier 37 (shown in fig. 3) or a recuperative heat exchanger 16 (shown in fig. 2), are inserted into outer tubes 4. The open outer ends 26 of inner tubes 14 distally of the closed outer end of outer tubes 4 are the inlet openings for the feed gas (represented by arrows 28). Inner tubes 14 are fixed by means of flanges 32 to second wall 12. Second wall 12 functions as dividing wall for an inlet manifold 11, into which debouch inlet openings 26 formed by the open outer ends 26 of inner tubes 14 distally of the closed outer ends of outer tubes 4. The lowest wall part 47 of inlet manifold 11 in the figure is coupled releasably to outlet manifold 10 by means of flanges 33, 34. Inlet openings 26 for feed gas 28 are in open connection with an inlet 35 in inlet manifold 11. Outlet openings 27 for the product gas (represented by arrows 29) on the underside of outer tubes 4 are in open connection with an outlet 36 in outlet manifold 10.

Furnace part 25 of steam reformer 23 comprises an outer jacket 2 in which are accommodated a burner 5, a combustion chamber 1 and a heat transfer section, this latter being formed by heat transfer tubes 3 which are closed at one outer end and which in the normal operating state enclose the corresponding outer tubes 4 of reformer part 24 (shown in fig. 2). Combustion gases, represented by arrows 38, are discharged via a discharge channel which comprises channels 39 in a heat shield 6 around the closed outer end of the respective tubes 3 and which is otherwise formed by the outer wall of the respective heat transfer tubes 3 and coaxial cylindrical jackets 8 which extend round these walls and which are provided with passage openings 40. The discharge channel leads to an outlet 9 in a part of furnace part 25 far removed from the closed end of heat transfer tubes 3. Heat transfer from heat transfer tubes 3 to outer tubes 4 of the respective reactors takes place by means of radiation, wherein the combustion gases 38 and the feed gases 28 guided through reactor chambers 15 are in co-flow. The temperature of combustion gases 38 in the region 7 past channels 39 and before passage openings 40 has a temperature suitable for the heat exchange with the reactor chamber for the purpose of supplying the heat for the endothermic reaction.

Fig. 2 shows a steam reformer 30 in operating state. In addition to the above discussed components, this reformer 30 comprises in inner tubes 14 close to inlet opening 26 a first part 16 of a recuperative heat exchanger, by means of which the feed gases 28 to be admitted into inner tubes 14 are preheated and the product gases 29 to be discharged from reactor chamber 15 are cooled, a part of a foil 17 which is not provided with a catalyst and which as second part of the recuperative heat exchanger provides for the transfer of heat from the outflowing product gas 29 to the inflowing feed gas 28, and a heat exchanger 19 around a part of heat transfer tube 3. The figure also shows in schematic manner an outlet manifold 18 with an outlet 22 for discharge of combustion gases 38, a heat exchanger 19 around a part of the outer tubes 4 of the respective reactors and the corresponding part of the outlet manifold 18,and seals 20 and 21 for sealing combustion gases 38 at respectively relatively high and low temperatures.

Fig. 3 shows a part of an inner tube 14 around which a metal carrier foil 37 with a catalyst layer is arranged, this foil having in a cross-section through the inner tube a periodic structure of successive peaks 41 and valleys 42.

Fig. 4 shows foil 42 of fig. 3 in a situation before being arranged round tube 14, wherein the peaks 41 and valleys 42 form a rectangular crenellation in a cross-section.

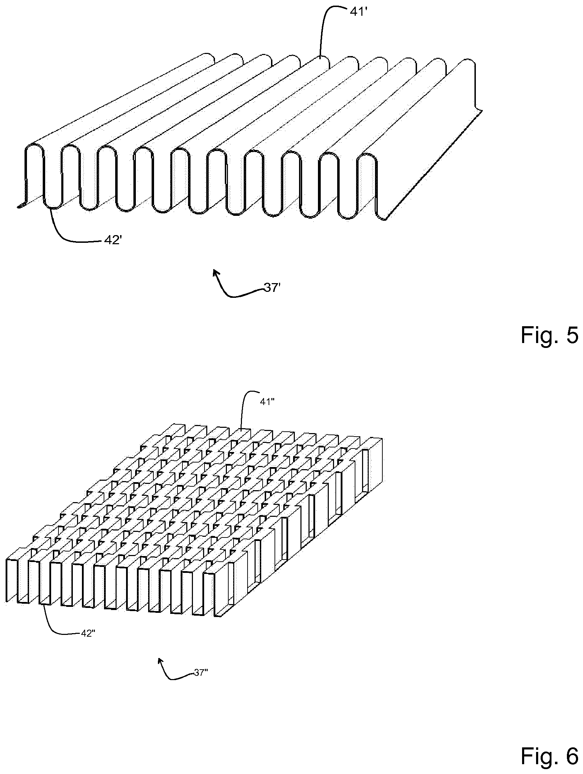

Fig. 5 shows a second embodiment of a foil 42' in a situation before being arranged round a tube 14, wherein the peaks 41' and valleys 42' have a regular wave pattern in a cross-section.

Fig. 6 shows a third embodiment of a foil 42" in a situation before being arranged round a tube 14, wherein the peaks 41" and valleys 42" form a rectangular crenellation both in a cross-section and in axial direction.

## Claims

1. Apparatus (23, 30) for converting a feed gas (28) comprising organic compounds and water vapour into a product gas (29) substantially comprising carbon dioxide and hydrogen, comprising
- a reformer part (24) with at least one reaction chamber (15) which is provided with an inlet opening (26) for feed gas (28) and an outlet opening (27) for product gas (29) and which is bounded by the inner wall of an outer tube (4) closed at one outer end and the outer wall of an inner tube (14) received coaxially in this outer tube and open at both its outer ends, and
- a furnace part (25) for heating the reaction chamber (15),
- wherein the inlet opening (26) is provided by the open outer end of the inner tube (14) distally of the closed outer end of the outer tube (4), and the outlet opening (27) is provided by the open outer end of the outer tube (4),
- wherein the reformer part (24) is provided with an outlet chamber (10), into a first wall (31) of which the open outer end of the outer tube (4) debouches, which outlet chamber (10) is provided with a second wall (12) lying opposite the first wall (31), **characterized in that**
the reformer part (24) is provided with an inlet chamber (11) which is bounded by the second wall (12) of the outlet chamber (10) and a third wall (47) lying opposite this second wall (12) and coupled releasably to the second wall (12), and
the second wall (12) is provided with a closable insertion opening (13) lying opposite the outer tube (4) allowing the inner tube (14) to be inserted into the outer tube (4), wherein the inner tube (14) is fixed by means of flanges (32) to the second wall (12) and the third wall (47) is coupled releasably to the outlet chamber (10) by means of flanges (33, 34).

2. Apparatus (23, 30) as claimed in claim 1, **characterized in that**
the reactor chamber (15) comprises a catalyst material.

3. Apparatus (23, 30) as claimed in claim 2, **characterized in that** the catalyst material is provided on at least a part of a carrier foil (37, 37', 37") arranged around the inner tube (14).

4. Apparatus (23, 30) as claimed in claim 3, **characterized in that** the carrier foil (37, 37', 37") has in a cross-section through the inner (14) and the outer tube (4) a periodic structure of successive peaks (41, 41', 41") and valleys (42, 42', 42").

5. Apparatus (30) as claimed in any of the claims 1-4, wherein the reactor chamber (15) is provided with a heat exchanger (17) for transfer of heat between feed gas (28) supplied through the inner tube (14) and product gas (29) flowing through the reactor chamber (15), **characterized in that** the heat exchanger (17) is provided by a foil (37, 37', 37") of a heat conductive material arranged around at least a part of the inner tube (14), this foil (37, 37', 37") having in a cross-section through the inner (14) and the outer tube (4) a periodic structure of successive peaks (41, 41', 41") and valleys (42, 42', 42").

6. Apparatus (23, 30) as claimed in any of the claims 1-5, wherein the furnace part (25) comprises a burner (5), a combustion chamber (1) and a heat transfer section, **characterized in that** the heat transfer section is provided by at least one heat transfer tube (3) which is closed at one outer end and by which the at least one outer tube (4) of the reformer part (24) is enclosed.

7. Apparatus (23, 30) as claimed in claim 6, **characterized in that** the furnace part (25) comprises a discharge channel for combustion gases (38) which is formed by the outer wall of the heat transfer tube (3) and a coaxial cylindrical jacket (8) extending round this wall and provided with passage openings (40).

8. Apparatus (23) as claimed in claim 7, **characterized in that** the passage openings (40) are provided in a part of the cylindrical jacket (8) proximally of the closed outer end of the heat transfer tube (3), and the discharge channel also comprises an outlet (9) in a part of the heat transfer section distally of the closed outer end of the heat transfer tube (3).

9. Apparatus (30) as claimed in claim 7, **characterized by** a heat exchanger (19) for transfer of heat between the heat transfer section and the reactor chamber (15), this heat exchanger (19) being provided by a foil of a heat conductive material arranged around at least a part of the heat transfer tube (3), which foil has in a cross-section through the heat transfer tube (3) a periodic structure of successive peaks and valleys.

10. Apparatus (30) as claimed in claim 7, **characterized in that** the heat transfer tube (3) is provided on its outer side with a heat-insulating material in a zone around its closed outer end.

11. Apparatus (23, 30) as claimed in any of the claims 1-10, **characterized in that** the reformer part (24) comprises at least two reactors placed in parallel, wherein the respective inlet openings (26) are coupled by a shared inlet manifold (11), and the respective outlet openings (27) are coupled by a shared outlet manifold (10).

12. Apparatus (23, 30) as claimed in claim 11, wherein the number of parallel reactors amounts to 3n²-3n+1, wherein n is a whole number 2≤n≤13, which reactors in a cross-section are placed adjacently within a regular hexagon in parallel rows, wherein a first outer row comprises n reactors and each subsequent row comprises one reactor more up to a maximum of 2n-1 reactors, after which each subsequent row comprises one reactor less up to a second outer row lying opposite the first outer row, which second outer row comprises n reactors.

## Patentansprüche

1. Vorrichtung (23, 30) zum Umwandeln eines Einsatzgases (28), das organische Verbindungen und Wasserdampf aufweist, in ein Produktgas (29), das im Wesentlichen Kohlendioxid und Wasserstoff aufweist, mit folgenden Merkmalen:
einem Reformerteil (24) mit zumindest einer Reaktionskammer (15), die mit einer Einlassöffnung (26) für Einsatzgas (28) und einer Auslassöffnung (27) für Produktgas (29) versehen ist und die durch die Innenwand eines Außenrohrs (4), das an einem äußeren Ende geschlossen ist, und die Außenwand eines Innenrohrs (14), das koaxial in diesem Außenrohr aufgenommen ist und an seinen beiden äußeren Enden offen ist, begrenzt wird, und
einem Ofenteil (25) zum Erhitzen der Reaktionskammer (15),
wobei die Einlassöffnung (26) durch das offene äußere Ende des Innenrohrs (14) distal von dem geschlossenen äußeren Ende des Außenrohrs (4) vorgesehen ist und die Auslassöffnung (27) durch das offene äußere Ende des Außenrohrs (4) vorgesehen ist,
wobei das Reformerteil (24) mit einer Auslasskammer (10) versehen ist, wobei das offene äußere Ende des Außenrohrs (4) in eine erste Wand (31) derselben einmündet, wobei die Auslasskammer (10) mit einer zweiten Wand (12) vorgesehen ist, die der ersten Wand (31) gegenüberliegt, **dadurch gekennzeichnet, dass**
das Reformerteil (24) mit einer Einlasskammer (11) versehen ist, die durch die zweite Wand (12) der Auslasskammer (10) und eine dritte Wand (47), die dieser zweiten Wand (12) gegenüberliegt und mit der zweiten Wand (12) lösbar gekoppelt ist, begrenzt wird, und
die zweite Wand (12) mit einer verschließbaren Einfügungsöffnung (13) versehen ist, die dem Außenrohr (4) gegenüberliegt und ermöglicht, dass das Innenrohr (14) in das Außenrohr (4) eingefügt wird, wobei das Innenrohr (14) anhand von Flanschen (32) an der zweiten Wand (12) befestigt ist und die dritte Wand (47) anhand von Flanschen (33, 34) lösbar mit der Auslasskammer (10) gekoppelt ist.

2. Vorrichtung (23, 30) gemäß Anspruch 1,
**dadurch gekennzeichnet, dass**
die Reaktorkammer (15) ein Katalysatormaterial aufweist.

3. Vorrichtung (23, 30) gemäß Anspruch 2,
**dadurch gekennzeichnet, dass** das Katalysatormaterial auf zumindest einem Teil einer Trägerfolie (37, 37', 37"), die um das Innenrohr (14) herum angeordnet ist, vorgesehen ist.

4. Vorrichtung (23, 30) gemäß Anspruch 3,
**dadurch gekennzeichnet, dass** die Trägerfolie (37, 37', 37") in einem Querschnitt durch das Innen- (14) und das Außenrohr (4) eine periodische Struktur aufeinanderfolgender Spitzen (41, 41', 41") und Täler (42, 42', 42") aufweist.

5. Vorrichtung (30) gemäß einem der Ansprüche 1 bis 4, bei der die Reaktorkammer (15) mit einem Wärmetauscher (17) zur Übertragung von Wärme zwischen Einsatzgas (28), das durch das Innenrohr (14) zugeführt wird, und Produktgas (29), das durch die Reaktorkammer (15) fließt, versehen ist, **dadurch gekennzeichnet, dass** der Wärmetauscher (17) durch eine Folie (37, 37', 37") eines wärmeleitfähigen Materials bereitgestellt wird, das um zumindest einen Teil des Innenrohrs (14) herum angeordnet ist, wobei diese Folie (37, 37', 37") in einem Querschnitt durch das Innen- (14) und das Außenrohr (4) eine periodische Struktur aufeinanderfolgender Spitzen (41, 41', 41") und Täler (42, 42', 42") aufweist.

6. Vorrichtung (23, 30) gemäß einem der Ansprüche 1 bis 5, bei der das Ofenteil (25) einen Brenner (5), eine Verbrennungskammer (1) und einen Wärmeübertragungsabschnitt aufweist, **dadurch gekennzeichnet, dass** der Wärmeübertragungsabschnitt durch zumindest ein Wärmeübertragungsrohr (3) bereitgestellt wird, das an einem äußeren Ende geschlossen ist und von dem das zumindest eine Außenrohr (4) des Reformerteils (24) umschlossen ist.

7. Vorrichtung (23, 30) gemäß Anspruch 6, **dadurch gekennzeichnet, dass** das Ofenteil (25) einen Ableitungskanal für Verbrennungsgase (38) aufweist, der durch die Außenwand des Wärmeübertragungsrohrs (3) und einen koaxialen zylindrischen Mantel (8), der sich um diese Wand herum erstreckt und mit Durchgangsöffnungen (40) versehen ist, gebildet ist.

8. Vorrichtung (23) gemäß Anspruch 7, **dadurch gekennzeichnet, dass** die Durchgangsöffnungen (40) in einem Teil des zylindrischen Mantels (8) proximal bezüglich des geschlossenen äußeren Endes des Wärmeübertragungsrohrs (3) vorgesehen sind und dass der Ableitungskanal ferner einen Auslass (9) in einem Teil des Wärmeübertragungsabschnitts distal bezüglich des geschlossenen äußeren Endes des Wärmeübertragungsrohrs (3) aufweist.

9. Vorrichtung (30) gemäß Anspruch 7, **gekennzeichnet durch** einen Wärmetauscher (19) für eine Übertragung von Wärme zwischen dem Wärmeübertragungsabschnitt und der Reaktorkammer (15), wobei dieser Wärmetauscher (19) durch eine Folie eines wärmeleitfähigen Materials bereitgestellt wird, das um zumindest einen Teil des Wärmeübertragungsrohrs (3) herum angeordnet ist, wobei diese Folie in einem Querschnitt durch das Wärmeübertragungsrohr (3) eine periodische Struktur aufeinanderfolgender Spitzen und Täler aufweist.

10. Vorrichtung (30) gemäß Anspruch 7, **dadurch gekennzeichnet, dass** das Wärmeübertragungsrohr (3) auf seiner Außenseite in einer Region um sein geschlossenes äußeres Ende herum mit einem wärmeisolierenden Material versehen ist.

11. Vorrichtung (23, 30) gemäß einem der Ansprüche 1 bis 10, **dadurch gekennzeichnet, dass** das Reformerteil (24) zumindest zwei parallel platzierte Reaktoren aufweist, wobei die jeweiligen Einlassöffnungen (26) anhand eines gemeinsamen Einlassverteilers (11) gekoppelt sind und die jeweiligen Auslassöffnungen (27) anhand eines gemeinsamen Auslassverteilers (10) gekoppelt sind.

12. Vorrichtung (23, 30) gemäß Anspruch 11, bei der die Anzahl paralleler Reaktoren 3n²-3n+1 beträgt, wobei n eine Ganzzahl 2≤<n≤13 ist, wobei die Reaktoren in einem Querschnitt innerhalb eines regelmäßigen Sechsecks in parallelen Reihen nebeneinander platziert sind, wobei eine erste Außenreihe n Reaktoren aufweist und jede nachfolgende Reihe einen Reaktor mehr aufweist, bis zu einem Maximum von 2n-1 Reaktoren, wonach jede nachfolgende Reihe einen Reaktor weniger aufweist, bis zu einer zweiten Außenreihe, die der ersten Außenreihe gegenüberliegt, wobei die zweite Außenreihe n Reaktoren aufweist.

## Revendications

1. Dispositif (23, 30) pour convertir un gaz d'alimentation (28) comprenant des composés organiques et de la vapeur d'eau en un gaz de produit (29) comprenant substantiellement du dioxyde de carbone et de l'hydrogène, comprenant
- une partie reformeur (24) avec au moins une chambre réactionnelle (15) qui est prévue avec une ouverture d'entrée (26) pour le gaz d'alimentation (28) et d'une ouverture de sortie (27) pour le gaz de produit (29) et qui est délimitée par la paroi intérieure d'un tube extérieur (4) fermé à une extrémité extérieure et la paroi extérieure d'un tube intérieur (14) qui est reçu de manière coaxiale dans ce tube extérieur et qui est ouvert à chacune de ses deux extrémités extérieures, et
- une partie four (25) pour chauffer la chambre réactionnelle (15),
- dans lequel l'ouverture d'entrée (26) est prévue par l'extrémité extérieure ouverte du tube intérieur (14) à distance de l'extrémité extérieure fermée du tube extérieur (4), et l'ouverture de sortie (27) est formée par l'extrémité extérieure ouverte du tube extérieur (4),
- dans lequel la partie reformeur (24) est prévue avec une chambre de sortie (10), dans une première paroi (31) de laquelle débouche l'extrémité extérieure ouverte du tube extérieur (4), laquelle chambre de sortie (10) est prévue avec une deuxième paroi (12) située à l'opposé de la première paroi (31),
**caractérisé en ce que**
la partie reformeur (24) est prévue avec une chambre d'entrée (11) qui est délimitée par la deuxième paroi (12) de la chambre de sortie (10) et une troisième paroi (47) située à l'opposé de cette deuxième paroi (12) et couplée de manière libérable à la deuxième paroi (12), et
la deuxième paroi (12) est prévue avec une ouverture d'insertion fermable (13) située à l'opposé du tube extérieur (4) pour permettre l'insertion du tube intérieur (14) dans le tube extérieur (4), dans lequel le tube intérieur (14) est fixé au moyen de brides (32) à la deuxième paroi (12), et la troisième paroi (47) est couplée de manière libérable à la chambre extérieure (10) au moyen de brides (33, 34).

2. Dispositif (23, 30) selon la revendication 1, **caractérisé en ce que** la chambre de réacteur (15) comprend un matériau catalytique.

3. Dispositif (23, 30) selon la revendication 2, **caractérisé en ce que** le matériau catalytique est prévu sur au moins une partie d'une feuille de support (37, 37', 37") agencée autour du tube intérieur (14).

4. Dispositif (23, 30) selon la revendication 3, **caractérisé en ce que** la feuille de support (37, 37', 37") a, dans une section transversale à travers les tubes intérieur (14) et extérieur (4), une structure périodique de crêtes (41, 41', 41") et de vallées (42, 42', 42") successives.

5. Dispositif (30) selon l'une quelconque des revendications 1 à 4, dans lequel la chambre de réacteur (15) est prévue avec un échangeur de chaleur (17) pour transférer de la chaleur entre le gaz d'alimentation (28) délivré à travers le tube intérieur (14) et le gaz de produit (29) qui s'écoule à travers la chambre de réacteur (15), **caractérisé en ce que** l'échangeur de chaleur (17) est prévue par une feuille (37, 37', 37") d'un matériau conducteur de la chaleur disposée autour d'au moins une partie du tube intérieur (14), cette feuille (37, 37', 37") ayant, dans une section transversale à travers les tubes intérieur (14) et extérieur (4), une structure périodique de crêtes (41, 41', 41") et de vallées (42, 42', 42") successives.

6. Dispositif (23, 30) selon l'une quelconque des revendications 1 à 5, dans lequel la partie four (25) comprend un brûleur (5), une chambre de combustion (1) et une section de transfert de chaleur, **caractérisé en ce que** la section de transfert de chaleur est prévue par au moins un tube de transfert de chaleur (3) qui est fermé à une extrémité extérieur et dans lequel l'au moins un tube extérieur (4) de la partie reformeur (24) est enfermé.

7. Dispositif (23, 30) selon la revendication 6, **caractérisé en ce que** la partie four (25) comprend un canal de décharge pour les gaz de combustion (38) qui est formé par la paroi extérieure du tube de transfert de chaleur (3) et une enveloppe cylindrique coaxiale (8) s'étendant autour de cette paroi et dotée d'ouvertures de passage (40).

8. Dispositif (23) selon la revendication 7, **caractérisé en ce que** les ouvertures de passage (40) sont prévues dans une partie de l'enveloppe cylindrique (8) à proximité de l'extrémité extérieure fermée du tube de transfert de chaleur (3), et le canal de décharge comporte aussi une sortie (9) dans une partie de la section de transfert de chaleur à distance de l'extrémité extérieure fermée du tube de transfert de chaleur (3).

9. Dispositif (30) selon la revendication 7, **caractérisé par** un échangeur de chaleur (19) pour transférer de la chaleur entre la section de transfert de chaleur et la chambre de réacteur (15), cet échangeur de chaleur (19) étant prévu par une feuille d'un matériau conducteur de la chaleur disposée autour d'au moins une partie du tube de transfert de chaleur (3), laquelle feuille a, dans une section transversale à travers le tube de transfert de chaleur (3), une structure périodique de crêtes et de vallées successives.

10. Dispositif (30) selon la revendication 7, **caractérisé en ce que** le tube de transfert de chaleur (3) est prévu sur son côté extérieur d'un matériau d'isolation thermique dans une zone autour de son extrémité extérieure fermée.

11. Dispositif (23, 30) selon l'une quelconque des revendications 1 à 10, **caractérisé en ce que** la partie reformeur (24) comprend au moins deux réacteurs placés en parallèle, dans lequel les ouvertures d'entrée respectives (26) sont couplées par un collecteur d'entrée partagé (11), et les ouvertures de sortie respectives (27) sont couplées par un collecteur de sortie partagé (10).

12. Dispositif (23, 30) selon la revendication 11, dans lequel le nombre de réacteurs parallèles se monte à 3n²-3n+1, où n est un nombre entier avec 2 ≤ n ≤ 13, lesquels réacteurs, dans une section transversale, sont placés de manière adjacente à l'intérieur d'un hexagone régulier en rangées parallèles, dans lequel une première rangée extérieure comprend n réacteurs et chaque rangée suivante comprend un réacteur de plus jusqu'à un maximum de 2n-1 réacteurs, après quoi chaque rangée suivante comprend un réacteur de moins jusqu'à une deuxième rangée extérieure située à l'opposé de la première rangée extérieure, laquelle deuxième rangée extérieure comprend n réacteurs.
